# EUROPÄISCHE PATENTSCHRIFT

(11) **EP 3 865 981 B1**
(45) Veröffentlichungstag und Bekanntmachung des Hinweises auf die Patenterteilung: **25.10.2023**
(21) Anmeldenummer: 20156794.8
(22) Anmeldetag: 12.02.2020
(51) Int. Cl.: G06F 3/01, G06F 3/03, G06T 7/80

(54) **VERFAHREN UND VORRICHTUNG ZUM KALIBRIEREN EINES 3D-BILDSENSORS**
METHOD AND DEVICE FOR CALIBRATION OF A 3D IMAGE SENSOR
PROCÉDÉ ET DISPOSITIF D'ÉTALONNAGE D'UN CAPTEUR D'IMAGE 3D

(43) Veröffentlichungstag der Anmeldung: 18.08.2021
(73) Patentinhaber: Valeo Comfort and Driving Assistance, 94000 Créteil (FR)
(72) Erfinder: PUTZ, Thomas, 96476 Bad Rodach (DE); FALTINATH, Andreas, 96476 Bad Rodach (DE)
(74) Vertreter: Pothmann, Karsten

(56) Entgegenhaltungen:
- WO-A1-2019/011027
- KAHLMANN T ET AL: "Calibration for Increased Accuracy of the Range Imaging Camera Swissranger", ISPRS COMMISSION V SYMPOSIUM 'IMAGE ENGINEERING AND VISION METROLOGY',, 25. September 2006 (2006-09-25), XP008139070,

## Beschreibung

Die vorliegende Erfindung betrifft ein Verfahren und eine Vorrichtung zum Kalibrieren eines 3D-Bildsensors. Der 3D-Bildsensor kann insbesondere eine 3D-Kamera sein, wie etwa eine Kamera vom Time-of-Flight (TOF)-Typ. Die Erfindung betrifft des Weiteren ein Computerprogramm, das zur Ausführung des Verfahrens konfiguriert ist, sowie ein System zur Gestenerkennung, insbesondere zur Gestenerkennung in einem Fahrzeug, das die genannte Vorrichtung aufweist und eingerichtet ist, das Verfahren auszuführen, um einen zur Gestenerkennung vorgesehenen 3D-Bildsensor des Systems zu kalibrieren.

Neben oder anstelle von herkömmlichen Benutzerschnittstellen zur Vornahme von Benutzereingaben an einem technischen Gerät oder System sind inzwischen auch neuere Methoden zur Vornahme von Benutzereingaben im Vormarsch, wozu die Eingabe mittels Gestenerkennung gehört. Darunter ist die automatische Erkennung von durch Menschen ausgeführten Gesten mittels eines Computers zu verstehen. Die Gesten werden dabei meist sensorisch erfasst, oftmals bildsensorisch. Jede Körperhaltung und Körperbewegung kann dabei prinzipiell eine erkennbare Geste darstellen, wobei jedoch die Erkennung von Hand- und Kopfgesten meist im Vordergrund steht.

Die Gestenerkennung hat inzwischen auch in der Fahrzeugtechnik Einzug gehalten, insbesondere um Benutzereingaben eines Fahrers oder anderen Passagiers zum Zwecke der Steuerung von den Gesten jeweils zugeordneten Funktionalitäten des Fahrzeugs vorzunehmen. Beispielsweise können Funktionalitäten eines Entertainmentsystems eines Fahrzeugs mittels einer Gestenerkennung gesteuert sein. Eine solche Gestenerkennung findet oftmals im dreidimensionalen Raum statt, wobei 3D-Bildsensoren, also Bildsensoren (insbesondere Kameras) die ein Bild in drei räumlichen Dimensionen erfassen können, zum Einsatz kommen, um die Geste sensorisch zu erfassen. Wenn im Folgenden von einem "Bildsensor" die Rede ist, ist daher stets ein 3D-Bildsensor gemeint.

Eine zuverlässige Gestenerkennung erfordert in der Regel eine möglichst korrekte und wenig fehleranfällige (d.h. robuste) sensorische Erfassung der relevanten Gesten. Allerdings sind die von einem 3D-Bildsensor gelieferten 3D-Bilddaten oftmals nicht nur von der konkreten relativen Lage eines zu erfassenden Objekts, insbesondere der Lage eines Nutzers relativ zum 3D-Bildsensor, abhängig, sondern zusätzlich auch von anderen Einflüssen. Dies können insbesondere Umwelteinflüsse sein, wie etwa die im Sichtfeld des 3D-Bildsensors herrschende Lufttemperatur, oder auch vom Alter des 3D-Bildsensors abhängige Einflüsse. Dies gilt insbesondere oftmals auch für TOF-Kameras. Die Zuverlässigkeit einer 3D-Bilderfassung mittels eines 3D-Bildsensors und insbesondere die Zuverlässigkeit einer darauf aufsetzenden Gestenerkennung kann somit durch derartige Einflüsse signifikant beeinträchtigt sein. Speziell bei der Gestenerkennung im Fahrzeug werden typischerweise Raumbereiche definiert, in denen Gesten des Fahrers erwartet und gemessen werden sollen (oft als "Regions of interest", ROI, bezeichnet) und/oder Bereiche, in denen Gesten ignoriert werden sollen (oft als "Exclusion Boxes" bezeichnet). Wird die präzise Distanzmessung mittels des 3D-Bildsensors aufgrund der genannten Einflüsse, insbesondere Umwelteinflüsse oder Alterseinflüsse, ungenau, so kann dies insbesondere zu einem räumlichen Verschieben dieser Raumbereiche führen somit eine fehlerfreie Interaktion eines Benutzers mit dem Gestenerkennungssystem beeinträchtigen.

Aus dem Stand der Technik ist die WO 2019/011027 A1 bekannt, welche ein Bildkalibrierungsverfahren und eine Vorrichtung offenbart, die auf eine dreidimensionale Kamera angewendet werden. Das Verfahren umfasst: das Fotografieren eines zu prüfenden Objekts unter Verwendung der dreidimensionalen Kamera, das Erhalten eines Bildes des zu prüfenden Objekts in einem lichtempfindlichen Bereich der dreidimensionalen Kamera und das Bestimmen eines Pixelpunkts, der dem zu prüfenden Objekt im lichtempfindlichen Bereich gemäß dem Bild des zu prüfenden Objekts entspricht; Erhalten von Tiefeninformationen für den Pixelpunkt des zu prüfenden Objekts, die dem Pixelpunkt entsprechen, wobei die Tiefeninformationen einen Abstand zwischen dem zu prüfenden Objekt und dem Pixelpunkt angeben; und Abrufen eines Messabweichungswerts, der dem Pixelpunkt entspricht, aus einer im Voraus gespeicherten Messabweichungseinstellung und Korrektur der Tiefeninformationen entsprechend dem Messabweichungswert. Daher wird das von der dreidimensionalen Kamera erhaltene Bild des zu prüfenden Objekts kalibriert, indem die Tiefeninformation des zu prüfenden Objekts entsprechend dem Pixelpunkt korrigiert wird, um eine im Bild des zu prüfenden Objekts erzeugte Verzerrung zu eliminieren.

Ferner offenbart das Dokument "Calibration for Increased Accuracy of the Range Imaging Camera Swissranger" (Kahlmann T ET AL; ISPRS COMMISSION V SYMPOSIUM 'IMAGE ENGINEERING AND VISION METROLOGY'; 25. September 2006 (2006-09-25), XP008139070) ein Kalibrierverfahren von Sensoren zur Erfassung von Bildern mit Tiefeninformationen in Abhängigkeit von Parametern.

Der Erfindung liegt die Aufgabe zugrunde, die bei einer 3D-Bilderfassung anhand eines 3D-Bildsensors erreichbare Zuverlässigkeit bezüglich der resultierenden Ergebnisse, insbesondere von Distanzmesswerten, zu verbessern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zum Kalibrieren eines 3D-Bildsensors. Das Verfahren weist auf:
(i) für jeden einer Mehrzahl von verschiedenen vorbestimmten Raumpunkten auf einer Strahlungsreflektionsfläche, insbesondere Oberfläche, zumindest einer körperlichen Struktur im Sichtfeld eines 3D-Bildsensors, wobei die Position der Raumpunkte im Sichtfeld des 3D-Bildsensors jeweils fixiert ist: (i-1) Veranlassen der Messung einer Distanz des jeweiligen Raumpunktes vom 3D-Bildsensor und Empfangen eines Werts für die dabei jeweils gemessene Distanz; und (i-2) Ermitteln einer Distanzabweichung der jeweiligen gemessenen Distanz von einer als Maß für eine tatsächliche Distanz des jeweiligen Raumpunkts von dem 3D-Bildsensor vorab bestimmten jeweiligen Referenzdistanz;
(ii) Bestimmen eines Distanzkorrekturwerts in Abhängigkeit von den für zumindest zwei der Raumpunkte jeweils ermittelten Distanzabweichungen, so dass der Distanzkorrekturwert in dem durch diese Distanzabweichungen aufgespannten Distanzintervall liegt; und
(iii) Berücksichtigen des Distanzkorrekturwerts im Rahmen einer Korrektur des Messergebnisses für zumindest eine bei einer nachfolgenden weiteren Distanzmessung mittels des 3D-Bildsensors gemessenen Distanz.

Eine solche Distanzabweichung kann im Falle gleicher Distanzen eine Übereinstimmung statt einer tatsächlichen Distanzabweichung angeben.

Unter einem "3D-Bildsensor" im Sinne der Erfindung ist ein 3D-Bildsensor, insbesondere eine 3D-Kamera, zu verstehen, die in der Lage ist, eine Szene in drei räumlichen Dimensionen sensorisch zu erfassen, sodass dabei insbesondere die Messung von Distanzen der Szene ermöglicht ist. Insbesondere sind Time-of-Flight (TOF) Kameras "3D-Bildsensoren" im Sinne der Erfindung.

Unter einem "Raumpunkt" im Sinne der Erfindung ist ein Punkt, optional einschließlich seiner unmittelbaren Umgebung auf einer Strahlungsreflektionsfläche zu verstehen. Das die Position der Raumpunkte im Sichtfeld des 3D-Bildsensors jeweils fixiert ist so zu verstehen, dass die Raumpunkte relativ zum 3D-Bildsensor so angeordnet sind, dass die relative Lage der Raumpunkte zu dem 3D-Bildsensor als konstant angenommen werden kann. Die Raumpunkte sind somit regelmäßig nicht auf relativ zum Bildsensor beweglichen Strahlungsreflektionsflächen vorzusehen und andersherum ist auch der Bildsensor statisch relativ zu den Raumpunkte anzuordnen. Eine solche Fixierung kann beispielsweise in einem Fahrzeug vorliegen, wenn der 3D-Bildsensor an einer feststehenden Konsole fixiert ist und die Raumpunkte jeweils auf einem relativ zum Fahrzeug und somit auch zum 3D-Bildsensor im Wesentlichen unbeweglichen Oberfläche des Fahrzeuginterieurs, beispielsweise auf dem Armaturenbrett, definiert sind.

Unter einer "körperlichen Struktur" im Sinne der Erfindung ist ein beliebiger aus Materie gebildeter Körper zu verstehen, der eine Strahlungsreflexionsfläche aufweist und zumindest im Bereich dieser Strahlungsreflexionsfläche als Festkörper ausgebildet ist.

Unter einer "Strahlungsreflexionsfläche" im Sinne der Erfindung ist dabei eine Fläche an oder in einer körperlichen Struktur zu verstehen, die geeignet ist, von außerhalb der körperlichen Struktur auf die Fläche einfallende elektromagnetische Strahlung zumindest teilweise zu reflektieren, sodass die reflektierte Strahlung durch einen außerhalb der körperlichen Struktur angeordneten 3D-Bildsensor erfassbar ist. Eine Strahlungsreflexionsfläche kann somit insbesondere ein Flächenabschnitt der Oberfläche der körperlichen Struktur sein. Sie kann aber insbesondere auch eine im Inneren der körperlichen Struktur ausgebildete Fläche sein, die bei einer Bestrahlung der körperlichen Struktur durch von außerhalb dieser einfallende elektromagnetische Strahlung, insbesondere Licht, erreicht werden kann, sodass es zur Reflexion kommen und die reflektierte Strahlung die körperliche Struktur wieder verlassen kann. Beispielsweise ist ein im Inneren eines ansonsten für die Strahlung transparenten Körpers angeordnete Spiegelfläche eine solche Strahlungsreflexionsfläche.

Unter einer "Distanz" im Sinne der Erfindung ist eine räumliche Entfernung zweier Punkte oder Objekte im dreidimensionalen Raum zu verstehen. Insbesondere kann einer der beiden Punkte bzw. Objekte durch einen 3D-Bildsensor und der jeweils andere der beiden Punkte bzw. Objekte durch einen Raumpunkt auf einer Strahlungsreflexionsfläche einer körperlichen Struktur definiert sein.

Unter einer "Distanzabweichung" im Sinne der Erfindung ist entsprechend eine Abweichung der (gemessenen) Distanz gegenüber der auf denselben Raumpunkt bezogenen Referenzdistanz zu verstehen, wobei die Abweichung insbesondere als Differenz der Werte der beiden Distanzen oder als ihr Verhältnis ausgedrückt werden kann. Auch andere Arten, die Distanzabweichung auszudrücken, die mit der Größe der Differenz der gemessenen Distanzen positiv korrelieren, sind denkbar.

Mithilfe des vorgenannten Verfahrens nach dem ersten Aspekt kann eine Kalibrierung eines 3D-Bildsensors besonders zuverlässig erfolgen. Insbesondere ermöglicht die Verwendung einer Mehrzahl von Raumpunkten bzw. von deren bekannten jeweiligen Referenzdistanzen zum 3D-Bildsensor eine höhere statistische Sicherheit für die Korrektheit (im Sinne der Erreichung einer gewünschten Zuverlässigkeit der nachfolgenden Distanzmessungen) der im Rahmen des Verfahrens abgeleiteten Korrektur der Messergebnisse der Distanzmessungen (im Sinne einer Kalibrierung) als dies insbesondere bei der Verwendung nur eines einzelnen Raumpunktes oder einigen anderen denkbaren Kalibrierverfahren, wie etwa bei einer nur zeitabhängigen Messwertkorrektur, möglich wäre. Dies wiederum erlaubt die Sicherung oder Erhöhung der Zuverlässigkeit eines auf der Verwendung des zu kalibrieren 3D-Bildsensors beruhenden Bilderfassungssystems, insbesondere eines darauf beruhenden Gestenerkennungssystems. Das Verfahren erlaubt es insbesondere, eine wiederholte, insbesondere regelmäßige Kalibrierung des 3D-Bildsensors vorzunehmen, um so trotz äußerer Einflüsse und Alterungseinflüssen dessen langfristige fehlerfreie Verwendung zu erreichen.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Gemäß einigen Ausführungsformen erfolgt ein Auslösen des Veranlassens der Messung einer Distanz des jeweiligen Raumpunktes vom 3D-Bildsensor in Abhängigkeit vom Wert eines oder mehrerer Parameter, wobei diese Parameter jeweils einzeln oder insgesamt, insbesondere in Kombination, zumindest eine der folgenden Größen repräsentieren oder davon abhängen: (i) Zeit; (ii) Temperatur; (iii) Luftfeuchtigkeit. Auf diese Weise wird das Verfahren nur dann durchgeführt, wenn der bzw. die Werte des bzw. der Parameter darauf hindeuten, dass die von dem 3D-Bildsensor gelieferten Bilderfassungsergebnisse, insbesondere Distanzmessungen, aufgrund der durch den bzw. die Parameterwerte gekennzeichneten Zeit- oder Umwelteinflüsse mit erhöhter Wahrscheinlichkeit fehlerhaft sein könnten. So lässt sich die Kalibrierung besonders effizient mit dem sonstigen operativen Betrieb des 3D-Bildsensors vereinbaren und zugleich eine hohe Zuverlässigkeit der erreichbaren Bilderfassungsergebnisse sicherstellen.

Gemäß einigen Ausführungsformen ist die Anzahl N der verschiedenen vorbestimmten Raumpunkte eine ungerade Zahl, insbesondere drei. Dies hat den Vorteil, dass die Robustheit des Verfahrens dadurch erhöht werden kann, dass im Falle eines ungeraden Werts für N Pattsituationen vermieden werden können. Falls nämlich N gerade ist, könnte eine solche Pattsituation insbesondere entstehen, wenn für eine erste Gruppe aus N/2 der Raumpunkte im Wesentlichen untereinander gleiche oder zumindest ähnliche erste Abweichungswerte und für eine zweite Gruppe aus ebenfalls N/2 der Raumpunkte im Wesentlichen untereinander gleiche oder zumindest ähnliche aber von den ersten Abweichungswerten signifikant unterschiedliche zweite Abweichungswerte festgestellt werden. Dann sind beide Gruppen von Abweichungswerten im Sinne der sie stützenden Raumpunkte gleich stark mit der Stärke N/2 vertreten und so ist die Entscheidung, welcher der durch die Gruppen repräsentierten Abweichungswerte für die Bestimmung des Distanzkorrekturwerts Verwendung finden soll, erschwert. Folglich können die Zuverlässigkeit bzw. Qualität der Kalibrierung beeinträchtigt sein. Wenn N ungerade gewählt wird, stellt speziell die Wahl N = 3 den einfachsten Fall für einen ungeraden Wert für N > 1 dar, der somit den geringsten Implementierungs- und Rechenaufwand bedingt.

Gemäß einigen Ausführungsformen weist das Verfahren des Weiteren auf: (i) vor dem Veranlassen der Messung einer Distanz des jeweiligen Raumpunktes vom 3D-Bildsensor: Prüfen, insbesondere wiederholtes Prüfen, ob sich im Sichtfeld des 3D-Bildsensors ein Objekt zwischen dem 3D-Bildsensor und einer definierten Anzahl der vorbestimmten Raumpunkte befindet; (i) wenn dies der Fall ist, Aussetzen der Veranlassung der Messung; und (ii) andernfalls Fortsetzen des Verfahrens einschließlich der Veranlassung der Messung. Der Schritt (i) kann insbesondere zu Verfahrensbeginn oder im Rahmen eines mehrstufigen Verfahrensablaufs mit einer Mehrzahl von jeweils eine Stufe bildenden Schleifendurchläufen zu Beginn eines, bevorzugt jedes, Durchlaufs, global für alle Raumpunkte oder je Raumpunkt ausgeführt werden. Bei diesen Ausführungsformen wird somit geprüft, ob eine Durchführung des Verfahrens überhaupt sinnvoll ist, wobei dafür eine korrekte Distanzmessung bezüglich einer Mehrzahl der Raumpunkte erforderlich ist. Stehen dagegen aufgrund ihrer Verdeckung im Sichtfeld des 3D Sensors durch das Objekt nicht ausreichend viele unverdeckte Raumpunkte für eine korrekte Messung zur Verfügung ("kritische Verdeckung"), erfolgt das Aussetzen der Veranlassung der Messung, um eine unzuverlässige oder unbrauchbare Messung zu vermeiden. Das Aussetzen der Veranlassung der Messung kann insbesondere im Sinne eines Verfahrensabbruchs oder im Sinne eines wiederholten Durchlaufens des Prüfschritts, bis keine kritische Verdeckung von Raumpunkten durch das Objekt mehr detektiert wird, erfolgen.

Erfindungsgemäß weist das Verfahren des Weiteren auf: (i) Prüfen wie hoch die Anzahl der Raumpunkte ist, deren jeweilige ermittelte Distanzabweichung eine vorbestimmte Abweichungsschwelle erreicht oder überschreitet; (ii) wenn diese Anzahl einen vorbestimmten Anzahlschwellwert erreicht oder überschreitet, Beenden des Verfahrens oder, im Falle eines mehrstufigen Verfahrensablaufs, zumindest des aktuellen Durchlaufs des Verfahrens; und andernfalls Fortsetzen des Verfahrens bzw. aktuellen Durchlaufs. So kann verhindert werden, dass eine angesichts der Erreichung oder Überschreitung der Abweichungsschwelle wahrscheinlich fehlerhafte Bestimmung des Distanzkorrekturwerts auf Basis von voraussichtlich fehlerhaft bestimmten Distanzen und somit voraussichtlich fehlerhaft bestimmten Distanzabweichungen erfolgt. Insgesamt kann so die Zuverlässigkeit des Verfahrens und somit der Kalibrierung erhöht werden. Der Prüfschritt kann vor oder nach oder gleichzeitig mit der vorausgehend schon beschriebenen Prüfung erfolgen, ob sich im Sichtfeld des 3D-Bildsensors ein Objekt zwischen dem 3D-Bildsensor und einer definierten Anzahl der vorbestimmten Raumpunkte befindet.

Bei einigen dieser Ausführungsformen kann der Prüfschritt (i) zusätzlich ein Prüfen dahingehend umfassen, ob die jeweilige Messkonfidenz der vom 3D-Bildsensor vorgenommenen Distanzmessung für eine jeweiligen Raumpunkt eine Konfidenzschwelle erreicht oder überschreitet und somit als ausreichend zuverlässig eingestuft werden kann. Das Fortsetzen der weiteren Bestimmung des auf dieser Distanzabweichung beruhenden Distanzkorrekturwerts im vorgenannten Schritt (ii) erfolgt dann nur, wenn sowohl die ermittelte Distanzabweichung unterhalb der Abweichungsschwelle bleibt als auch die Messkonfidenz die Konfidenzschwelle erreicht oder überschreitet. So kann die Zuverlässigkeit des Verfahrens weiter erhöht werden. Messkonfidenzwerte werden von 3D-Bildsensoren, insbesondere TOF-Kameras, oftmals zusammen mit den zugehörigen eigentlichen Messwerten geliefert, so dass diese Ausführungsformen insbesondere bei Verwendung solcher 3D-Bildsensoren zum Tragen kommen können.

Gemäß einigen Ausführungsformen weist das Verfahren des Weiteren ein Auswählen derjenigen zwei der Raumpunkte auf, deren zugehörige Distanzmessungen gemäß einem Konfidenzkriterium, das auf den für die Raumpunkte ermittelten Distanzabweichungen beruht, die jeweils relativ höchste Konfidenz (diese ist von der vorgenannten "Messkonfidenz" zu unterscheiden) unter allen Raumpunkte aufweist. Dabei erfolgt das Bestimmen des Distanzkorrekturwerts in Abhängigkeit von den für diese zwei bestimmten Raumpunkte jeweils ermittelten Distanzabweichungen so, dass der Distanzkorrekturwert in dem durch diese beiden Distanzabweichungen aufgespannten Distanzintervall liegt. Auch so kann die Zuverlässigkeit des Verfahrens weiter erhöht werden, da nur die gemäß ihrer Konfidenz voraussichtlich am verlässlichsten bestimmten Distanzabweichungen für die Bestimmung des die Qualität der Kalibrierung bestimmenden Distanzkorrekturwerts herangezogen werden.

Gemäß hierauf aufbauenden Ausführungsformen weist das Auswählen der zwei Raumpunkte auf: (i) Berechnen der jeweiligen Differenz der zugehörigen Distanzabweichungen eines ersten und eines zweiten der Raumpunkte für alle möglichen Paare von jeweils zwei verschiedenen der Raumpunkte; und (ii) Bestimmen der betragsmäßig kleinsten dieser Differenzen und Festlegen der zu dieser betragsmäßig kleinsten Differenz korrespondierenden zwei Raumpunkte als die ausgewählten Raumpunkte. Auf diese Weise wird dasjenige Paar von Raumpunkten für die weitere Bestimmung des Distanzkorrrekturwerts ausgewählt, deren entsprechende Werte für die Distanzabweichungen am ähnlichsten sind, d. h. am wenigsten voneinander abweichen. Dem liegt der Gedanke zugrunde, dass aufgrund der Ähnlichkeit dieser beiden Werte für die jeweiligen Distanzabweichungen die Distanzmessungen für die entsprechenden beiden Raumpunkte vermutlich am zuverlässigsten erfolgt sind, jedenfalls falls N = 3, und somit die erforderlichen Genauigkeit der Kalibrierung bei Berücksichtigung genau dieses ausgewählten Paares von Raumpunkten wahrscheinlich am besten erreicht werden kann.

Gemäß weiterer Ausführungsformen hierzu weist das Verfahren auf: (i) Prüfen, ob die Differenz der jeweiligen Distanzabweichungen der beiden ausgewählten Raumpunkte eine vorbestimmte Differenzschwelle erreicht oder überschreitet; (ii) wenn dies der Fall ist, Beenden des Verfahrens oder, im Falle eines mehrstufigen Verfahrensablaufs, zumindest des aktuellen Durchlaufs des Verfahrens; und (iii) andernfalls Fortsetzen des Verfahrens bzw. aktuellen Durchlaufs. Auf diese Weise kann die Robustheit des Kalibrierverfahrens weiter verbessert werden, da beruhend auf dieser Filterung eine aufgrund ihrer Größe mutmaßlich fehlerhaft bestimmte Differenz der beiden Distanzabweichungen und somit eine mutmaßlich fehlerhaft bestimmte Distanzmessung selbst nicht zur Bestimmung des Distanzkorrekturwerts herangezogen werden. So kann insbesondere einer möglichen Verschlechterung einer schon auf Basis eines früheren Kalibrierungsvorgangs bestehenden Kalibrierung des 3D-Bildsensors im Rahmen einer nun erfolgenden erneuten Kalibrierung auf Basis solcher potentiellen Fehlmessungen begegnet werden, indem diese nicht herangezogen werden.

Gemäß weiterer Ausführungsformen hierzu wird der Distanzkorrekturwert, soweit er bestimmt wird (also das Verfahren bzw. der aktuelle Durchlauf nicht zuvor abgebrochen werden), anhand einer Mittelwertbildung auf Basis der für die ausgewählten Raumpunkte ermittelten, einzelnen Distanzabweichungen ermittelt. Auch dies dient der Erhöhung der Robustheit des Kalibrierverfahrens, da die Mittelwertbildung statistisch betrachtet eine gute Näherung an den - meist unbekannten - bestmöglichen Wert für die Distanzkorrekturwert darstellt.

Gemäß einigen Ausführungsformen wird das Verfahren iterativ durchgeführt und weist dazu zumindest zwei Durchläufe auf, in denen, wie vorausgehend unter Bezugnahme auf den ersten Aspekt der Erfindung beschrieben, ein jeweiliger Distanzkorrekturwert für den entsprechenden Durchlauf bestimmt wird. Zudem erfolgt das Berücksichtigen der bei den Durchläufen jeweils bestimmten Distanzkorrekturwerte im Rahmen der Korrektur des Messergebnisses für die zumindest eine bei einer nachfolgenden weiteren Distanzmessung mittels des 3D-Bildsensors gemessenen Distanz anhand eines globalen Distanzkorrekturwerts, der in Abhängigkeit von den in den einzelnen Durchläufen insgesamt bestimmten Distanzkorrekturwerten ermittelt wird. Insbesondere kann dabei gemäß einigen dieser Ausführungsformen der globale Distanzkorrekturwert anhand einer Mittelwertbildung auf Basis der für die verschiedenen Durchläufe ermittelten, einzelnen Distanzkorrekturwerte ermittelt werden. Die iterative Durchführung mittels mehrerer Durchläufe, in denen jeweils ein Wert für den Distanzkorrekturwert bestimmt wird, und die darauf aufsetzende Bestimmung eines globalen Distanzkorrekturwerts, der sodann zur Kalibration des 3D-Sensors herangezogen wird, können wiederum vorteilhaft zur Erhöhung der Robustheit und Zuverlässigkeit des Kalibrierverfahrens genutzt werden. Insbesondere können so Schwankungen in der Verteilung der einzelnen Distanzkorrekturwerte ausgeglichen und somit eine bessere Näherung an einen (meist vorab unbekannten) optimalen Distanzkorrekturwert erreicht werden.

Gemäß einigen Ausführungsformen weist das Verfahren des Weiteren ein Speichern zumindest des jeweils zuletzt ermittelten Distanzkorrekturwerts oder des nach einem der vorgenannten auf Iteration beruhenden Ausführungsformen bestimmten globalen Distanzkorrekturwerts in einem nichtflüchtigen Speicher. Dabei wird zur Korrektur des Messergebnisses für die bei zumindest einer nachfolgenden weiteren Distanzmessung mittels des 3D-Bildsensors jeweils gemessenen Distanz der zuletzt in dem Speicher gespeicherte Wert für den Distanzkorrekturwert bzw. gegebenenfalls für den globalen Distanzkorrekturwert herangezogen. Auf diese Weise kann kontinuierlich eine aktueller Wert für den Distanzkorrekturwert bzw. gegebenenfalls für den globalen Distanzkorrekturwert zur Verfügung gestellt werden und insbesondere der Alterungsprozess des 3D-Bildsensors mit einer entsprechenden altersabhängigen Werteentwicklung für den Distanzkorrekturwert bzw. gegebenenfalls für den globalen Distanzkorrekturwert begleitet werden, um über die Zeit durchgängig eine angemessene Kalibrierung des 3D-Bildsensors und somit Qualität seiner Messergebnisse zu erhalten.

Gemäß einigen Ausführungsformen wird zur Korrektur des Messergebnisses für die bei zumindest einer nachfolgenden weiteren Distanzmessung mittels des 3D-Bildsensors jeweils gemessenen Distanz zusätzlich ein dem 3D-Bildsenosr zugeordneter temperaturabhängiger Basiswert herangezogen. Dieser temperaturabhängige Basiswert kann insbesondere in einem Speicher in Form einer Wertetabelle (Look-up-Tabelle) vorgehalten werden, die die Temperaturabhängigkeit des Basiswerts abbildet. Die Verwendung eines solchen variablen Basiswerts erlaubt es, auf besonders effiziente Weise die Temperaturabhängigkeit der Distanzmessung im Rahmen der Kalibrierung zu berücksichtigen. Die Wertetabelle kann insbesondere bei einer erstmaligen Kalibration des 3D-Bildsensors oder zumindest einen baugleichen anderen 3D-Bildsensors empirisch bestimmt werden. Anstelle einer Wertetabelle kann grundsätzlich auch eine mathematische Gleichung bzw. Formel verwendet werden um den variablen Basiswert als Funktion der Temperatur mittels Berechnung zu bestimmen.

Ein zweiter Aspekt der Erfindung betrifft eine Vorrichtung zum Kalibrieren eines 3D-Bildsensors, wobei die Vorrichtung eingerichtet ist, das Verfahren nach der ersten Aspekt der Erfindung auszuführen. Die Vorrichtung kann insbesondere ein Computer sein oder ein Steuergerät für ein Fahrzeug. Des Weiteren kann die Vorrichtung insbesondere auch den verfahrensgemäß zu kalibrierenden 3D-Bildsensor selbst aufweisen.

Ein dritter Aspekt der Erfindung betrifft ein System zur Gestenerkennung, insbesondere zur Verwendung in einem Fahrzeug. Das System weist eine Vorrichtung nach dem zweiten Aspekt der Erfindung auf, die eingerichtet ist, das Verfahren nach dem ersten Aspekt der Erfindung auszuführen, um einen zur Gestenerkennung vorgesehenen 3D-Bildsensor des Systems zur Gestenerkennung zu kalibrieren. Das System kann insbesondere zur Installation in einem Fahrzeug, etwa einem Kraftfahrzeug, konfiguriert sein, um eine Gestensteuerung einer oder mehrerer Funktionalitäten des Fahrzeugs auf Basis einer Gestenerkennung mittels des Systems zu ermöglichen.

Ein vierter Aspekt der Erfindung betrifft ein Computerprogram mit Anweisungen, die bewirken, dass die Vorrichtung nach dem zweiten Aspekt der Erfindung die Schritte des Verfahrens nach dem ersten Aspekt der Erfindung ausführt. Das Computerprogramm kann insbesondere auf einem nichtflüchtigen Datenträger gespeichert sein. Insbesondere kann dies ein Datenträger in Form eines optischen Datenträgers oder eines nichtflüchtigen elektronischen Speichers, etwa eines Flashspeichermoduls, sein. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen.

Die Vorrichtung nach dem zweiten Aspekt kann entsprechend einen Programmspeicher aufweisen, in dem das Computerprogramm abgelegt ist. Alternativ kann die Vorrichtung auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch ein Gestenerkennungssystem gemäß einer Ausführungsform der Erfindung;
**Fig. 2** eine detailliertere schematische Darstellung eines Gestenerkennungssystems einschließlich einer Kalibriervorrichtung und eines 3D-Bildsensors, gemäß einer Ausführungsform der Erfindung, wobei das Gestenerkennungssystem insbesondere demjenigen aus Fig. 1 entsprechen kann; und
**Fig. 3** ein Flussdiagramm zur Veranschaulichung einer beispielhaften Ausführungsform des erfindungsgemäßen Verfahrens.

In den Figuren werden durchgängig dieselben Bezugszeichen für dieselben oder einander entsprechenden Elemente der Erfindung verwendet.

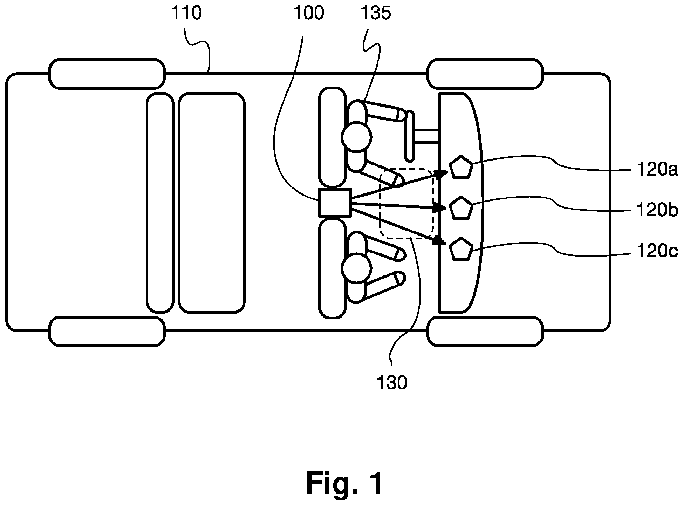

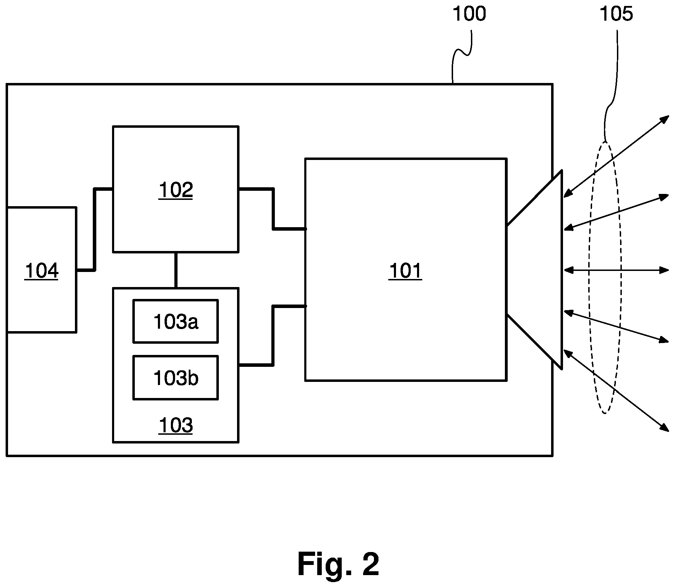

**Fig. 1** illustriert ein Fahrzeug 110, genauer ein Personenkraftfahrzeug, in dem ein System 100 zur Gestenerkennung vorgesehen ist. Der genaue Aufbau dieses Systems 100, welches im vorliegenden einfachen Beispiel mangels weiterer Systemkomponenten zugleich auch eine Vorrichtung zur Kalibrierung (Kalibriervorrichtung) eines 3D-Bildsensors darstellt, wird im Weiteren unter Bezugnahme auf Fig. 2 erläutert werden.

Das System 100 ist dazu konfiguriert, Gesten, die ein Nutzer 135 innerhalb eines im Fahrzeug 110 definierten Raumbereichs 130, der hier als Gestenerkennungsbereich bezeichnet werden soll, ausführt. Im vorliegenden Beispiel ist der Nutzer ein Fahrer oder ein Passagier des Fahrzeugs 110, der die Geste insbesondere mit der Hand oder dem Arm ausführt.

Zur Kalibrierung des Systems 100 sind drei bestimmte Raumpunkte 120a bis 120c an Oberflächen des Fahrzeuginterieurs festgelegt. Vorzugsweise befinden sich diese in verschiedenen Distanzen von dem zum System 100 gehörenden 3D-Bildsensor 101 (vgl. **Fig. 2****).** Als Oberflächen und somit Strahlungsreflektionsflächen kommen insbesondere Oberflächen an feststehenden Abschnitten des Fahrzeuginterieurs, deren relative Position zum 3D-Bildsensor 101 konstant und nicht konfigurierbar ist, infrage. Beispielsweise können ein oder mehrere dieser Punkte auf einem Armaturenbrett oder dem Dachhimmel liegen. Vorteilhafterweise liegen die Raumpunkte 120a bis 120c so, dass die Sichtlinie vom 3D-Bildsensor 101 zu diesen Raumpunkten 120a bis 120c zumindest abschnittsweise durch den Gestenerkennungsbereich 130 verläuft.

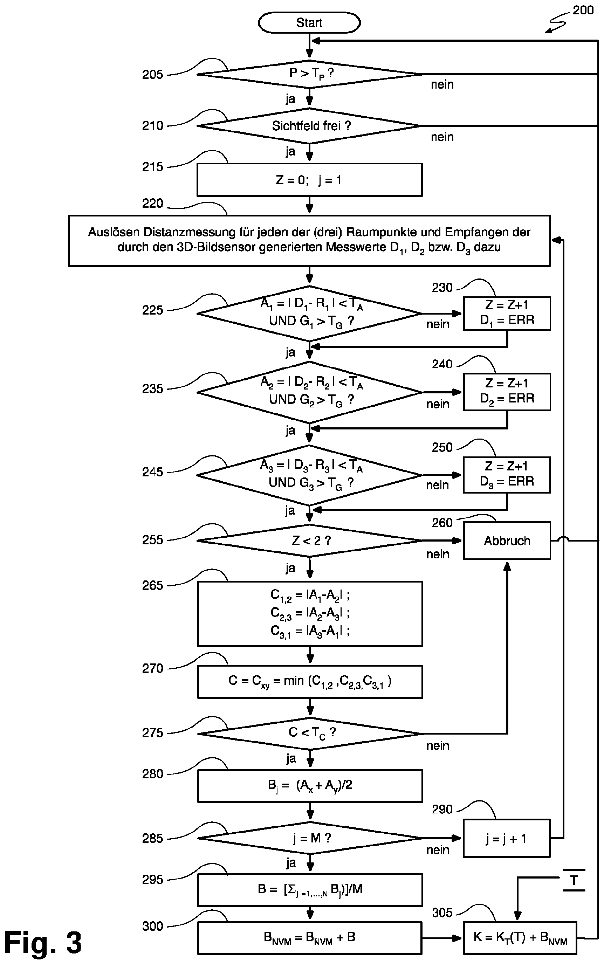

Der Aufbau des Systems 100 ist in **Fig. 2** genauer gezeigt. Das System 100 weist einen 3D-Bildsensor 101 auf, der insbesondere als 3D-Kamera, etwa als TOF-Kamera, ausgebildet sein kann. Der 3D-Bildsensor 101 ist folglich in der Lage, mittels Detektion entsprechender elektromagnetischer Strahlung 105, insbesondere von Licht, eine Szene dreidimensional zu erfassen und insbesondere Distanzen von Objekten relativ zum 3D-Bildsensor 101 zu messen. Insbesondere im Falle einer TOF-Kamera ist der 3D-Bildsensor 101 zudem in der Lage, die Distanzmessungen auf Basis von Laufzeitmessungen durchzuführen, und dazu selbst als Strahlungsquelle für die elektromagnetische Strahlung 105 zu agieren sowie daraus resultierende, von Objekten im Fahrzeug reflektierte elektromagnetische Strahlung zu detektieren. Insbesondere ist der 3D-Bildsensor 101 in der Lage, seine jeweilige Distanz zu jedem der Raumpunkte 120a bis 120c im Fahrzeug 110 zu Kalibrierzwecken im Rahmen des in Fig. 3 illustrierten Kalibierverfahrens 200 zu messen.

Des Weiteren verfügt das System 100 über eine Prozessorplattform 102, die insbesondere als Mikrocontroller ausgebildet sein kann und zumindest einen Prozessor aufweist. Die Prozessorplattform 102 kann einen Lese- und Schreibzugriff auf eine Speichervorrichtung 103 des Systems 100 durchführen, wobei die Speichervorrichtung 103 vorzugsweise sowohl über einen schnellen flüchtigen Speicher 103a (z.B. DRAM) als auch einen nichtflüchtigen Speicher 103b (engl. non-volatile memory, NVM, z.B. Flash), verfügt. Beide Speicher sind mehrfach beschreibbar. Die Speichervorrichtung 103 kann insbesondere als integrierter Baustein oder in Form voneinander separater Speichereinheiten ausgebildet sein. In letzterem Falle können insbesondere der flüchtige Speicher 103a und der nichtflüchtige Speicher 103b separat voneinander in verschiedenen Komponenten ausgebildet sein.

Zusätzlich weist das System 100 neben jeweiligen Datenverbindungen der Prozessorplattform 102 und/oder der Speichervorrichtung 103 mit dem 3D-Bildsensor 101 über eine externe Schnittstelle 104 zum Empfang und zur Ausgabe von Daten auf, mittels der die Kommunikation mit anderen, systemexternen Komponenten des Fahrzeugs 110 ermöglicht ist. Insbesondere kann es sich dabei um eine Schnittstelle zu einem Fahrzeugbus, beispielsweise zu einem CAN-Bus oder einem LIN-Bus handeln. Über die Schnittstelle 104 können insbesondere Sensordaten anderer Fahrzeugkomponenten, insbesondere eines Temperatursensors, empfangen werden. Zudem können vom System 100 erzeugte Signale, insbesondere Signale, welche vom Gestenerkennungssystem 100 während seines Betriebs detektierte Gesten des Nutzers 135 repräsentieren, oder vom 3D-Bildsensors 101 erzeugte Bilddaten ausgegeben werden.

In dem nicht flüchtigen Speicher 103b kann insbesondere auch ein Computerprogramm abgelegt sein, welches dazu konfiguriert ist, auf der Prozessorplattform 102 abzulaufen, und dadurch zu bewirken, dass das System 100, insbesondere dessen Prozessorplattform 102, das erfindungsgemäße Verfahren ausführt, beispielsweise gemäß Fig. 3. Die Prozessorplattform 102 in Kombination mit dem in der Speichervorrichtung 103 abgelegten Computerprogramm kann als Kalibriervorrichtung für den 3D-Bildsensor 101 des Systems 100 betrachtet werden, wobei nicht ausgeschlossen ist, dass diese Kalibriervorrichtung zusätzlich auch für andere Aufgaben jenseits des Kalibrierens vorgesehen ist, insbesondere im Rahmen der Gestenerkennung oder sonstigen Bildauswertung oder zur Steuerung des Systems. Optional können insbesondere auch der Bildprozessor 101 und oder die Schnittstelle 104 als Teil der Kalibriervorrichtung betrachtet werden, so dass im Grenzfall die Kalibriervorrichtung und das gesamte Gestenerkennungssystem 100 zusammenfallen können.

Die gemäß einer unter Normbedingungen vorausgehend, insbesondere schon bei der Herstellung des Fahrzeugs 110, mittels hochgenauer Messungen bestimmten Werte R₁ bis R₃ für die jeweiligen Distanzen vom 3D-Bildsensor 101 zu den Raumpunkten 120a bis 120c sind in dem nichtflüchtigen Speicher 103b abgelegt. Des Weiteren ist in dem nichtflüchtigen Speicher 103b eine Wertetabelle abgelegt, deren Werte K_{T}(T) vorzugsweise bei der genannten Messung unter Normbedingungen und den jeweiligen Temperaturen T erzeugt wurden und die eine Abhängigkeit der Distanzmessung mittels des 3D-Bildsenors 101 von der Temperatur T, insbesondere einer Temperatur im Bereich des Sichtfelds des 3D-Bildsensors 101, repräsentieren. Darüber hinaus sind in dem nichtflüchtigen Speicher 103b eine Reihe von Verfahrensparametern abgelegt, die im Folgenden unter Bezugnahme auf Fig. 3 im Einzelnen erläutert und im Rahmen des dort illustrierten beispielhaften Verfahrens benötigt werden.

Die in **Fig. 3** illustrierte beispielhafte Ausführungsform 200 eines erfindungsgemäßen Verfahrens wird nun, ohne dass dies als Beschränkung darauf zu verstehen wäre, beispielhaft unter Bezugnahme auf das System aus den Figuren 1 und 2 erläutert. Das Verfahren 200 beginnt mit einem Schritt 205, in dem geprüft wird, ob das nachfolgende eigentliche Kalibrieren überhaupt ausgelöst werden soll. Dazu wird mindestens ein Triggerparameter P mit einer zugehörigen Triggerschwelle Tₚ oder einem sonstigen Triggerkriterium verglichen. Die Triggerschwelle T_{P} kann insbesondere durch einen Zeitablauf eines Timers oder einen Temperaturwert definiert werden. Beispielsweise könnte vorgesehen sein, dass das dem Schritt 205 im Verfahrensablauf nachfolgende Kalibrieren in durch den Timerablauf charakterisierten regelmäßigen Zeitintervallen ausgeführt wird, oder dass es ausgeführt wird, wenn seit der letzten Prüfung gemäß Schritt 205 eine Temperaturänderung jenseits einer bestimmten durch die Triggerschwelle T_{P} charakterisierten Temperaturdifferenz ergeben hat.

Die im Rahmen des Verfahrens 200 zur Bestimmung eines globalen Distanzkorrekturwerts B durchgeführten Distanzmessungen durch den 3D-Bildsensor 101 erfolgen unter Nutzung der letzten zuvor erfolgreich durchgeführten Kalibrierung, wobei die Rohwerte der Distanzmessungen mit einem Gesamtdistanzkorrekturwert K korrigiert werden. Dieser entspricht einer Summe aus einem Temperaturkorrekturwert K_{T}(T) zur aktuellen (sensorisch erfassten) Temperatur T, der aus der im Speicher 103 abgelegten Wertetabelle für K_{T}(T) entnommen wird, und einem Distanzkorrekturwert B_{NVM}, der im nichtflüchtigen Speicher (NVM) 103b abgelegt ist und einen kumulierten Distanzkorrekturwert aus allen früheren Kalibrierungen repräsentiert. Während K_{T}(T) also die Temperaturabhängigkeit der Distanzmessung, zumindest näherungsweise, kompensiert, dient der Distanzkorrekturwert B_{NVM} insbesondere dazu, bisherige Alterungseinflüsse auf die Messergebnisse im Sinne einer Kalibrierung zu kompensieren.

Ist das Triggerkriterium nicht erfüllt (205 - nein), so wird das weitere Verfahren nicht ausgelöst, sondern zum Start zurückverzweigt. Andernfalls (205 - ja) folgt ein weiterer Prüfschritt 210, in dem geprüft wird, ob sich im Sichtfeld des 3D-Bildsensors 101 ein Objekt, beispielsweise eine Hand eines Nutzers oder eine aufgeklappte Straßenkarte usw., befindet. Dies kann insbesondere durch automatische Bildauswertung eines von dem 3D-Bildsensor 101 aufgenommenen 3D-Bildes, das den Gestenerkennungsbereich 130 abdeckt, erfolgen. Alternativ kann der Schritt 210 auch entfallen, da die nachfolgend im Einzelnen beschriebene Sequenz der weiteren Schritte 225 bis 260 ebenfalls einen gewissen Schutz dagegen bietet, dass eine Kalibrierung fehlerhaft auf Distanzmessungen beruht, die aufgrund des Vorhandenseins eines Objekts in den Sichtlinien des 3D-Bildsensor 101 zu den drei vorbestimmten Raumpunkten 120a bis 120c verfälscht sind. Ist das Sichtfeld gemäß der Prüfung im Schritt 210 nicht frei (210 - nein) wird zum Start des Verfahrens 200 zurückgekehrt. Andernfalls (210 - ja) folgt ein Initialisierungsschritt 215, in dem ein Fehlmessungszähler Z sowie ein Durchlaufzähler j initialisiert werden. Im vorliegenden Beispiel wird Z mit dem Wert "0" und j mit dem Wert "1" initialisiert. Der Schritt 210 stellt somit einen ersten von mehreren Testschritten zur Absicherung einer ausreichenden (Ergebnis-)Zuverlässigkeit des Kalibrierverfahrens 200 dar.

Nun beginnt im Rahmen einer iterativen Struktur des Verfahrens 200 als erste Iteration ein erster Durchlauf (j = 1) mit einem weiteren Schritt 220, in dem eine Distanzmessung ausgelöst wird, bei der durch den 3D-Bildsensor 101 dessen jeweilige Distanz für jeden der drei Raumpunkte 120a bis 120c zum 3D-Bildsensor 101 bestimmt und entsprechende generierte Messwerte D₁, D₂ bzw. D₃ an die Prozessorplattform 102 und/oder die Speichervorrichtung 103 übermittelt werden.

Es folgt eine Sequenz aus weiteren Schritten 225 bis 250, wobei für jeden der drei Raumpunkte 120 a bis 120 c eine Überprüfung dahingehend erfolgt, ob der zugeordnete Messwert D₁, D₂ bzw. D₃ als ausreichend zuverlässig eingeschätzt und somit im Rahmen des Weiteren Kalibrierverfahrens berücksichtigt werden kann. Beispielhaft wird dies nun anhand der Schritte 225 und 230 für den ersten Raumpunkt 120a erläutert. Im Schritt 225 wird zunächst eine dem ersten Raumpunkt 120a zugeordnete Distanzabweichung A₁ als Absolutbetrag der Differenz zwischen dem zu diesem Raumpunkt gemessenen Messwert D₁ und der für diesen Raumpunkt vorab bestimmten Referenzdistanz R₁, die dazu aus dem nichtflüchtigen Speicher 103b ausgelesen wird, berechnet.

Sodann wird im Rahmen einer ersten Teilprüfung geprüft, ob die Distanzabweichung A₁ kleiner ist als eine als einer der Verfahrensparameter vorbestimmte Abweichungsschwelle T_{A}. Zusätzlich wird im Rahmen einer zweiten Teilprüfung geprüft, ob der vom 3D-Bildsensor 101 zum Messwert D₁ gelieferte Konfidenzwert G₁ oberhalb einer ebenfalls als einer der Verfahrensparameter vorbestimmten Konfidenzwertschwelle T_{G} liegt. Liefert eine der beiden Teilprüfungen negatives Ergebnis (225 - nein) so wird der Zähler Z inkrementiert und optional zusätzlich der Messwert D₁ auf einen vorbestimmten Fehlerwert ERR gesetzt, um anzuzeigen, dass dieser Wert im weiteren Verfahrensablauf nicht zur Kalibrierung des 3D-Bildsensors 101 herangezogen werden darf. Für die beiden anderen Raumpunkte 120b bzw. 120c erfolgt mit den Schritten 235 und 240 bzw. 245 und 250 eine entsprechende Prüfung.

Im nachfolgenden Schritt 255 wird der aus den vorangegangenen Prüfschritten resultierende Wert des Zählers Z dahingehend überprüft, ob er kleiner als eine als weiterer Verfahrensparameter bestimmten Schwelle ist, die im vorliegenden Beispiel auf den Wert "2" festgesetzt wurde. Diese Schwelle dient dazu festzustellen, ob gemäß den Prüfungen in den Schritten 225 bis 250 zu viele Fehlmessungen erkannt worden sind und somit eine weitere Fortsetzung des Kalibrierverfahrens 200 aus Zuverlässigkeitsgründen ausscheiden soll. Ist dies der Fall (255 - Nein), so wird entsprechend das Verfahren 200 im Schritt 260 abgebrochen und zum Start zurückverzweigt, um von dort aus gegebenenfalls das Verfahren 200 erneut zu beginnen. Der Schritt 255 stellt somit einen zweiten von mehreren Testschritten zur Absicherung einer ausreichenden (Ergebnis-)Zuverlässigkeit des Kalibrierverfahrens 200 dar.

Wird jedoch Z < 2 festgestellt, d.h. (255 - ja), folgt ein Schritt 265, in dem die Absolutbeträge C₁₂, C₂₃ und C₃₁ der Differenzen zwischen je zwei der vorausgehend bestimmten Distanzabweichungen A₁ bis A₃ berechnet werden. Im nachfolgenden Schritt 270 wird sodann der kleinste Wert C bzw. C_{xy} aus der Menge {C₁₂, C₂₃, C₃₁} bestimmt und sodann im Schritt 275 geprüft, ob dieser Wert C kleiner ist als eine ebenfalls als Verfahrensparameter vorbestimmte Differenzschwelle T_{C}. Wird dabei eine Überschreitung dieser Differenzschwelle T_{C} festgestellt (275 - nein), wird zum Schritt 260 zurückverzweigt, um das Verfahren aus Zuverlässigkeitsgründen abzubrechen. Der Wert C wird also so ausgewählt, dass er zu den beiden Raumpunkten korrespondiert, deren jeweilige Distanzabweichungen Aₓ und A_{y} einander am ähnlichsten sind, wobei die Indizes x und y, mit x, y ∈ {1,2,3} für die Auswahl dieser beiden Raumpunkte stehen.

Dies korrespondiert zu dem Gedanken, dass die entsprechenden Distanzmessungen auf die gleiche aktuelle Fehlkalibrierung des 3D-Bildsensors 101 zurückzuführen ist, während größere Unterschiede zwischen den einzelnen Distanzabweichungen A_{1,} A₂ bzw. A₃ voraussichtlich andere Ursachen haben und somit wahrscheinlich eine weniger belastbare Grundlage für eine Neukalibrierung im Rahmen des Verfahrens 200 darstellen und daher im Weiteren Verfahrensablauf nicht mehr zu berücksichtigen sind. Der Schritt 275 stellt somit einen dritten von mehreren Testschritten zur Absicherung einer ausreichenden (Ergebnis-)Zuverlässigkeit des Kalibrierverfahrens 200 dar.

Wird dagegen im Schritt 275 festgestellt, dass die Differenzschwelle T_{C} nicht überschritten wurde (275 - ja), wird im Schritt 280 für den aktuellen Durchlauf ein Distanzkorrekturwert Bⱼ = (Aₓ + A_{y})/2 als Mittelwert der beiden Distanzabweichungen Aₓ und A_{y} zu den beiden in der Sequenz der Schritte 265 bis 275 ausgewählten zu den Indizes x bzw. y gehörenden Raumpunkten berechnet. Der Distanzkorrekturwert Bⱼ liegt somit in dem durch diese Distanzabweichungen Aₓ und A_{y} aufgespannten Distanzintervall und stellt somit eine durch die beiden Distanzabweichungen Aₓ und A_{y} gleichwertig bestimmte Abschätzung für den Wert für Bⱼ dar.

Sodann wird im Schritt 285 geprüft, ob die mit dem weiteren Verfahrensparameter M vorgegebene Anzahl von durchzuführenden Durchläufen bereits erreicht wurde. Ist dies nicht der Fall (285 - nein), wird der Durchlaufzähler j inkrementiert und im Rahmen der Iteration für einen weiteren Durchlauf zum Schritt 220 zurückverzweigt. Andernfalls (285 - ja) wird im Schritt 295 aus der Gesamtheit der M in den einzelnen Durchläufen bestimmten Distanzkorrekturwerte Bⱼ mit j = 1,...,M ein globaler Distanzkorrekturwert B durch Mittelung über die Distanzkorrekturwerte Bⱼ bestimmt.

Nach dem letzten Durchlauf erfolgt im Schritt 300 die Anpassung des bisherigen Wertes für den gegenwärtig im nichtflüchtigen Speicher (NVM) 103b gespeicherter bisherigen als Kalibrierwert verwendeten Distanzkorrekturwert B_{NVM} durch Summation mit dem neu bestimmten globalen Distanzkorrekturwert B.

Wird nun im Schritt 305 eine nachfolgende Distanzmessung, insbesondere im Rahmen einer Gestenerkennung durchgeführt, so erfolgt eine Anpassung bzw. Korrektur der vom 3D-Bildsensor 101 hierbei gemessenen Rohwerte für die Distanzen mittels eines neuen Gesamtdistanzkorrekturwerts K. Dieser wird als Summe K des Temperaturkorrekturwerts K_{T}(T) zur aktuellen (sensorisch erfassten) Temperatur T, der aus der im Speicher 103 abgelegten Wertetabelle für K_{T}(T) entnommen wird, und dem im Schritt 300 neu bestimmten Distanzkorrekturwert B_{NVM} gebildet. Die je Durchlauf bestimmten Distanzkorrekturwerte Bⱼ werden somit im Rahmen einer Korrektur des Messergebnisses für die im Schritt 305 mittels des 3D-Bildsensors gemessenen Distanz über den auf Basis der Distanzkorrekturwerte Bⱼ in den Schritten 295 und 300 bestimmten aktualisierten Wert von B_{NVM} berücksichtigt. In einer (nicht dargestellten) Variante des Verfahrens 200 kann das Abspeichern des in Schritt 300 bestimmten Werts für B_{NVM} auch erst nach dem Schritt 305 erfolgen, wobei dann im Schritt 305 der Wert B als weiterer Summand auftritt, um zum selben Ergebnis für K zu kommen. Sobald nach dem Schritt 305 wieder die im Schritt 205 übergeprüfte Triggerbedingung eintritt, wird das Verfahren 200 erneut durchlaufen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Gestenerkennungssystem einschließlich Vorrichtung zum Kalibrieren eines 3D-Bildsensors, (Kalibriervorrichtung)
- 101: 3D-Bildsensor
- 102: Prozessor
- 103: Speichervorrichtung
- 103a: flüchtiger Speicher, z.B. DRAM
- 103b: nicht-flüchtiger Speicher, z.B. Flash
- 104: Schnittstelle
- 105: elektromagnetische Strahlung
- 110: Fahrzeug
- 120a-c: Raumpunkte
- 130: Gestenerkennungsbereich
- 135: Benutzer des Gestenerkennungssystems
- 200-305: Schritte des Kalibrierverfahrens

- A₁: Abweichung für ersten Raumpunkt
- A₂: Abweichung für zweiten Raumpunkt
- A₃: Abweichung für dritten Raumpunkt
- Bⱼ: Distanzkorrekturwert (Bias) aus dem aktuellen Durchlauf j
- B: globaler Distanzkorrekturwert
- B_{NVM}: zuletzt im NVM gespeicherter Distanzkorrekturwert
- C₁₂: Abweichungsdifferenz bzgl. erstem und zweitem Raumpunkt
- C₂₃: Abweichungsdifferenz bzgl. zweitem und drittem Raumpunkt
- C₃₁: Abweichungsdifferenz bzgl. drittem und ersten Raumpunkt
- C: kleinste der Abweichungsdifferenzen
- D₁: gemessene Distanz für ersten Raumpunkt
- D₂: gemessene Distanz für zweiten Raumpunkt
- D₃: gemessene Distanz für dritten Raumpunkt
- ERR: Fehlerwert
- j: Durchlaufzähler
- G₁: Konfidenz für Distanzmessung zum ersten Raumpunkt
- G₂: Konfidenz für Distanzmessung zum zweiten Raumpunkt
- G₃: Konfidenz für Distanzmessung zum dritten Raumpunkt
- K: Gesamtdistanzkorrekturwert
- K_{T}(T): Temperaturkorrekturwert als Funktion der Temperatur T (Wertetabelle)
- N: Parameter für Anzahl der Durchläufe
- P: Wert eines vorbestimmten Triggerparameters
- R₁: Referenzdistanz für ersten Raumpunkt
- R₂: Referenzdistanz für zweiten Raumpunkt
- R₃: Referenzdistanz für dritten Raumpunkt
- T_{A}: Abweichungsschwelle
- T_{C}: Differenzschwelle
- T_{G}: Konfidenzwertschwelle
- T_{P}: Triggerschwelle für Verfahrensauslösung
- Z: Fehlmessungszähler

## Patentansprüche

1. Verfahren (200) zum Kalibrieren eines 3D-Bildsensors (101), wobei das Verfahren (200) aufweist:
für jeden einer Mehrzahl von verschiedenen vorbestimmten Raumpunkten (120a,b,c) auf einer oder mehreren Strahlungsreflektionsflächen zumindest einer körperlichen Struktur im Sichtfeld eines 3D-Bildsensors (101), wobei die Position der Raumpunkte (120a,b,c) im Sichtfeld des 3D-Bildsensors (101) jeweils fixiert ist:
Veranlassen (220) der Messung einer Distanz (D1, D2, D3) des jeweiligen Raumpunktes (120a, b, c) vom 3D-Bildsensor (101) und Empfangen eines Werts für die dabei jeweils gemessene Distanz (D1, D2, D3); und
Ermitteln (225, 235, 245) einer Distanzabweichung (A1,...,A3) der jeweiligen gemessenen Distanz (D1, D2, D3) von einer als Maß für eine tatsächliche Distanz des jeweiligen Raumpunkts von dem 3D-Bildsensor (101) vorab bestimmten jeweiligen Referenzdistanz (R1, R2, R3);
Bestimmen (280) eines Distanzkorrekturwerts (Bj) in Abhängigkeit von den für zumindest zwei der Raumpunkte (120a,b,c) jeweils ermittelten Distanzabweichungen (Ax, Ay), so dass der Distanzkorrekturwert (Bj) in dem durch diese Distanzabweichungen (Ax, Ay) aufgespannten Distanzintervall liegt; und
Berücksichtigen (305) des Distanzkorrekturwerts (Bj) im Rahmen einer Korrektur des Messergebnisses für zumindest eine bei einer nachfolgenden weiteren Distanzmessung mittels des 3D-Bildsensors (101) gemessenen Distanz,
**dadurch gekennzeichnet, dass**
ein Prüfen (255) erfolgt, wie hoch die Anzahl der Raumpunkte (120a,b,c) ist, deren jeweilige ermittelte Distanzabweichung (A1,...,A3) eine vorbestimmte Abweichungsschwelle erreicht oder überschreitet;
wenn diese Anzahl einen vorbestimmten Anzahlschwellwert erreicht oder überschreitet, Beenden (260) des Verfahrens oder, im Falle eines mehrstufigen Verfahrensablaufs, zumindest des aktuellen Durchlaufs (j) des Verfahrens; und andernfalls Fortsetzen des Verfahrens bzw. aktuellen Durchlaufs (j).

2. Verfahren (200) nach Anspruch 1, wobei ein Auslösen (205) des Veranlassens (220) der Messung einer Distanz (D1, D2, D3) des jeweiligen Raumpunktes (120a, b, c) vom 3D-Bildsensor (101) in Abhängigkeit vom Wert eines oder mehrerer Parameter (Tp) erfolgt, wobei diese Parameter (Tp) jeweils einzeln oder insgesamt zumindest eine der folgenden Größen repräsentieren oder davon abhängen:
- Zeit;
- Temperatur (T);
- Luftfeuchtigkeit.

3. Verfahren (200) nach einem der vorausgehenden Ansprüche wobei die Anzahl (N) der verschiedenen vorbestimmten Raumpunkte (120a,b,c) eine ungerade Zahl ist.

4. Verfahren (200) nach einem der vorausgehenden Ansprüche, des Weiteren aufweisend:
vor dem Veranlassen (220) der Messung einer Distanz (D1, D2, D3) des jeweiligen Raumpunktes (120a, b, c) vom 3D-Bildsensor:
Prüfen (210), ob sich im Sichtfeld des 3D-Bildsensors (101) ein Objekt zwischen dem 3D-Bildsensor (101) und einer definierten Anzahl der vorbestimmten Raumpunkte (120a,b,c) befindet; und
wenn dies der Fall ist, Aussetzen der Veranlassung der Messung; und
andernfalls Fortsetzen des Verfahrens einschließlich der Veranlassung der Messung.

5. Verfahren (200) nach einem der vorausgehenden Ansprüche, des Weiteren aufweisend:
Auswählen (265, 270) derjenigen zwei der Raumpunkte, deren zugehörige Distanzmessungen gemäß einem Konfidenzkriterium, das auf den für die Raumpunkte (120a,b,c) ermittelten Distanzabweichungen (A1,...,A3) beruht, die jeweils relativ höchste Konfidenz unter allen Raumpunkten (120a,b,c) aufweist;
wobei das Bestimmen des Distanzkorrekturwerts (Bj) in Abhängigkeit von den für diese zwei bestimmten Raumpunkte jeweils ermittelten Distanzabweichungen (Ax, Ay) so erfolgt, dass der Distanzkorrekturwert (Bj) in dem durch diese beiden Distanzabweichungen (Ax, Ay) aufgespannten Distanzintervall liegt.

6. Verfahren (200) nach Anspruch 5, wobei das Auswählen (265, 270) der zwei Raumpunkte (120a,b,c) aufweist:
Berechnen (265) der jeweiligen Differenz (C12, C23, C31) der zugehörigen Distanzabweichungen (A1,...,A3) eines ersten und eines zweiten der Raumpunkte (120a,b,c) für alle möglichen Paare von jeweils zwei verschiedenen der Raumpunkte (120a,b,c); und
Bestimmen der betragsmäßig kleinsten dieser Differenzen und Festlegen der zu dieser betragsmäßig kleinsten Differenz (C) korrespondierenden zwei Raumpunkte als die ausgewählten Raumpunkte.

7. Verfahren (200) nach Anspruch 5 oder 6, des Weiteren aufweisend:
Prüfen, ob die Differenz (C) der jeweiligen Distanzabweichungen (Ax, Ay) der beiden ausgewählten Raumpunkte eine vorbestimmte Differenzschwelle (Tc) erreicht oder überschreitet;
wenn dies der Fall ist, Beenden (260) des Verfahrens (200) oder, im Falle eines mehrstufigen Verfahrensablaufs, zumindest des aktuellen Durchlaufs (j) des Verfahrens; und andernfalls Fortsetzen des Verfahrens (200) bzw. aktuellen Durchlaufs (j).

8. Verfahren (200) nach einem der Ansprüche 5 bis 7, wobei der Distanzkorrekturwert (Bj), soweit er bestimmt wird, anhand einer Mittelwertbildung (280) auf Basis der für die ausgewählten Raumpunkte ermittelten, einzelnen Distanzabweichungen (Ax, Ay) ermittelt wird.

9. Verfahren (200) nach einem der vorausgehenden Ansprüche, wobei:
das Verfahren (200) iterativ durchgeführt wird und dazu zumindest zwei (M) Durchläufe aufweist, in denen jeweils gemäß einem der vorausgehenden Ansprüche ein jeweiliger Distanzkorrekturwert (Bj) für den entsprechenden Durchlauf (j) bestimmt wird; und
das Berücksichtigen (305) der bei den Durchläufen (j) jeweils bestimmten Distanzkorrekturwerte (Bj) im Rahmen der Korrektur des Messergebnisses für die zumindest eine bei einer nachfolgenden weiteren Distanzmessung mittels des 3D-Bildsensors (101) gemessenen Distanz anhand eines globalen Distanzkorrekturwerts (B) erfolgt, der in Abhängigkeit von den in den einzelnen Durchläufen (j) insgesamt bestimmten Distanzkorrekturwerten (Bj) ermittelt (295) wird.

10. Verfahren (200) nach Anspruch 9, wobei der globale Distanzkorrekturwert (B) anhand einer Mittelwertbildung (295) auf Basis der für die verschiedenen Durchläufe (j) ermittelten, einzelnen Distanzkorrekturwerte (Bj) ermittelt wird.

11. Verfahren (200) nach einem der vorausgehenden Ansprüche, des Weiteren aufweisend:
Speichern (300) zumindest des jeweils zuletzt ermittelten Distanzkorrekturwerts (Bj) oder des nach einem der Ansprüche 9 bis 11 bestimmten globalen Distanzkorrekturwerts (B) in einem nichtflüchtigen Speicher (103b);
wobei zur Korrektur (305) des Messergebnisses für die bei zumindest einer nachfolgenden weiteren Distanzmessung mittels des 3D-Bildsensors (101) jeweils gemessenen Distanz der zuletzt in dem Speicher gespeicherte Wert (B_{NVM}) für den Distanzkorrekturwert (Bj) bzw. gegebenenfalls für den globalen Distanzkorrekturwert (B) herangezogen wird.

12. Verfahren (200) nach einem der vorausgehenden Ansprüche, wobei zur Korrektur (305) des Messergebnisses für die bei zumindest einer nachfolgenden weiteren Distanzmessung mittels des 3D-Bildsensors (101) jeweils gemessenen Distanz zusätzlich ein dem 3D-Bildsensor zugeordneter temperaturabhängiger Basiswert (K_{T}(T)) herangezogen wird.

13. Vorrichtung (102, 103) zum Kalibrieren eines 3D-Bildsensors (101), wobei die Vorrichtung eingerichtet ist, das Verfahren (200) nach einem der vorausgehenden Ansprüche auszuführen.

14. Vorrichtung (101, 102, 103) nach Anspruch 13, des Weiteren aufweisend den verfahrensgemäß zu kalibrierenden 3D-Bildsensor (101) selbst.

15. System (100) zur Gestenerkennung, aufweisend eine Vorrichtung (101, 102, 103) nach Anspruch 13 oder 14, die eingerichtet ist, das Verfahren (200) nach einem der Ansprüche 1 bis 12 auszuführen, um einen zur Gestenerkennung vorgesehenen 3D-Bildsensor (101) des Systems (100) zur Gestenerkennung zu kalibrieren.

16. Computerprogram mit Anweisungen, die bewirken, dass die Vorrichtung (101, 102, 103) nach Anspruch 13 oder 14 die Schritte des Verfahrens (200) nach einem der Ansprüche 1 bis 12 ausführt.

## Claims

1. Method (200) for calibrating a 3D image sensor (101), wherein the method (200) includes:
for each of a plurality of different predetermined spatial points (120a, b, c) on one or more radiation reflection surfaces of at least one physical structure within the field of view of a 3D image sensor (101), wherein the position of the spatial points (120a, b, c) is fixed in each case in the field of view of the 3D image sensor (101):
initiating (220) the measurement of a distance (D1, D2, D3) of the respective spatial point (120a, b, c) from the 3D image sensor (101) and receiving a value for the distance (D1, D2, D3) that is in each case measured in the process; and
ascertaining (225, 235, 245) a distance deviation (A1,..., A3) of the respective measured distance (D1, D2, D3) from a respective reference distance (R1, R2, R3) that has been determined in advance as a measure of an actual distance of the respective spatial point from the 3D image sensor (101);
determining (280) a distance correction value (Bj) in dependence on the distance deviations (Ax, Ay) ascertained in each case for at least two of the spatial points (120a, b, c) in a manner such that the distance correction value (Bj) lies in the distance interval spanned by these distance deviations (Ax, Ay); and
taking into account (305) the distance correction value (Bj) as part of a correction of the measurement result for at least one distance measured during a subsequent further distance measurement by means of the 3D image sensor (101),
**characterized in that**
a check (255) is performed as to the number of spatial points (120a, b, c) whose respective ascertained distance deviation (A1,...,A3) reaches or exceeds a predetermined deviation threshold;
if this number reaches or exceeds a predetermined number threshold, terminating (260) the method or, if the method sequence includes multiple stages, at least the current pass (j) through the method; and
otherwise continuing the method or current pass (j).

2. Method (200) according to Claim 1, wherein triggering (205) the initiation (220) of the measurement of a distance (D1, D2, D3) of the respective spatial point (120a, b, c) from the 3D image sensor (101) is carried out in dependence on the value of one or more parameters (Tp), wherein these parameters (Tp) each individually or in total represent or are dependent on at least one of the following variables:
- time;
- temperature (T);
- air humidity.

3. Method (200) according to either of the preceding claims, wherein the number (N) of the different predetermined spatial points (120a, b, c) is an odd number.

4. Method (200) according to any of the preceding claims, furthermore including:
before initiating (220) the measurement of a distance (D1, D2, D3) of the respective spatial point (120a, b, c) from the 3D image sensor:
- performing a check (210) as to whether an object is located in the field of view of the 3D image sensor (101) between the 3D image sensor (101) and a defined number of the predetermined spatial points (120a, b, c); and if this is the case, suspending the initiation of the measurement; and
otherwise continuing the method including the initiation of the measurement.

5. Method (200) according to any of the preceding claims, furthermore including:
selecting (265, 270) those two of the spatial points whose associated distance measurements that have, according to a confidence criterion that is based on the distance deviations (A1,...,A3) ascertained for the spatial points (120a, b, c), in each case the relatively highest confidence among all spatial points (120a, b, c);
wherein the determination of the distance correction value (Bj) is effected in dependence on the distance deviations (Ax, Ay) ascertained in each case for said two determined spatial points in a manner such that the distance correction value (Bj) lies in the distance interval spanned by said two distance deviations (Ax, Ay) .

6. Method (200) according to Claim 5, wherein the selecting (265, 270) of the two spatial points (120a, b, c) includes the following:
calculating (265) the respective difference (C12, C23, C31) of the associated distance deviations (A1,..., A3) of a first and of a second of the spatial points (120a, b, c) for all possible pairs of in each case two different ones of the spatial points (120a, b, c); and determining the smallest of these differences in terms of absolute value and defining, as the selected spatial points, the two spatial points that correspond to said smallest difference (C) in terms of absolute value.

7. Method (200) according to Claim 5 or 6, furthermore including:
checking whether the difference (C) of the respective distance deviations (Ax, Ay) of the two selected spatial points reaches or exceeds a predetermined difference threshold (Tc);
if this is the case, terminating (260) the method (200) or, if the method sequence includes multiple stages, at least the current pass (j) through the method; and
otherwise continuing the method (200) or current pass (j).

8. Method (200) according to any of Claims 5 to 7, wherein the distance correction value (Bj), if it is determined, is ascertained using averaging (280) on the basis of the individual distance deviations (Ax, Ay) ascertained for the selected spatial points.

9. Method (200) according to any of the preceding claims, wherein:
the method (200) is carried out iteratively and for this purpose has at least two (M) passes in which a respective distance correction value (Bj) is determined for the corresponding pass (j) in each case according to any of the preceding claims; and
the taking into account (305) of the distance correction values (Bj) determined in each case during the passes (j) as part of the correction of the measurement result for the at least one distance measured during a subsequent further distance measurement by means of the 3D image sensor (101) takes place on the basis of a global distance correction value (B), which is ascertained (295) in dependence on the distance correction values (Bj) that were determined in total in the individual passes (j).

10. Method (200) according to Claim 9, wherein the global distance correction value (B) is ascertained using averaging (295) on the basis of the individual distance correction values (Bj) ascertained for the different passes (j).

11. Method (200) according to any of the preceding claims, furthermore including:
storing (300) at least the distance correction value (Bj) that was respectively ascertained last or the global distance correction value (B) determined according to any of Claims 9 to 11 in a non-volatile memory (103b);
wherein for correcting (305) the measurement result the value (B_{NVM}) that was saved last in the memory for the distance correction value (Bj) or possibly for the global distance correction value (B) is used for the distance that is measured in each case during at least one subsequent further distance measurement by means of the 3D image sensor (101).

12. Method (200) according to any of the preceding claims, wherein a temperature-dependent base value (K_{T}(T)) that is assigned to the 3D image sensor is used additionally for correcting (305) the measurement result for the distance that is measured in each case during at least one subsequent further distance measurement by means of the 3D image sensor (101).

13. Apparatus (102, 103) for calibrating a 3D image sensor (101), wherein the apparatus is set up to carry out the method (200) according to any of the preceding claims.

14. Apparatus (101, 102, 103) according to Claim 13, furthermore including the 3D image sensor (101) to be calibrated according to the method itself.

15. System (100) for gesture recognition, comprising an apparatus (101, 102, 103) according to Claim 13 or 14, which is configured to carry out the method (200) according to any of Claims 1 to 12, in order to calibrate a 3D image sensor (101), which is provided for gesture recognition, of the system (100) for gesture recognition.

16. Computer program including instructions that cause the apparatus (101, 102, 103) according to Claim 13 or 14 to carry out the steps of the method (200) according to any of Claims 1 to 12.

## Revendications

1. Procédé (200) permettant d'étalonner un capteur d'image 3D (101), le procédé (200) présentant les étapes consistant à :
pour chacun d'une pluralité de différents points spatiaux prédéterminés (120a, b, c) sur une ou plusieurs surfaces de réflexion de rayonnement d'au moins une structure physique dans le champ de vision d'un capteur d'image 3D (101), la position des points spatiaux (120a, b, c) dans le champ de vision du capteur d'image 3D (101) étant respectivement fixe :
demander (220) la mesure d'une distance (D1, D2, D3) du point spatial (120a, b, c) respectif par rapport au capteur d'image 3D (101) et recevoir une valeur pour la distance (D1, D2, D3) respectivement mesurée ; et
établir (225, 235, 245) un écart de distance (A1, ..., A3) de la distance (D1, D2, D3) respectivement mesurée par rapport à une distance de référence (R1, R2, R3) respective déterminée au préalable comme une mesure d'une distance réelle du point spatial respectif par rapport au capteur d'image 3D (101) ;
déterminer (280) une valeur de correction de distance (Bj) en fonction des écarts de distance (Ax, Ay) établis respectivement pour au moins deux des points spatiaux (120a, b, c) de sorte que la valeur de correction de distance (Bj) se trouve dans l'intervalle de distance défini par ces écarts de distance (Ax, Ay) ; et
prendre en compte (305) la valeur de correction de distance (Bj) dans le cadre d'une correction du résultat de mesure pour au moins une distance mesurée au moyen du capteur d'image 3D (101) lors d'une autre mesure de distance suivante,
**caractérisé en ce qu'**une vérification (255) est effectuée pour savoir à combien s'élève le nombre des points spatiaux (120a, b, c) dont l'écart de distance (A1, ..., A3) respectivement établi atteint ou dépasse un seuil d'écart prédéterminé ;
si ce nombre atteint ou dépasse une valeur seuil de nombre prédéterminée, terminer (260) le procédé, ou dans le cas d'un déroulement de procédé en plusieurs étapes, terminer au moins le passage actuel (j) du procédé ; et
sinon poursuivre le procédé ou le passage actuel (j).

2. Procédé (200) selon la revendication 1, dans lequel un déclenchement (205) de la demande (220) de la mesure d'une distance (D1, D2, D3) du point spatial (120a, b, c) respectif par le capteur d'image 3D (101) est effectué en fonction de la valeur d'un ou de plusieurs paramètres (Tp), dans lequel ces paramètres (Tp) représentent respectivement individuellement ou ensemble au moins l'une des grandeurs suivantes ou en dépendent :
- le temps ;
- la température (T) ;
- l'humidité.

3. Procédé (200) selon l'une quelconque des revendications précédentes, dans lequel le nombre (N) des différents points spatiaux (120a, b, c) prédéterminés est un nombre impair.

4. Procédé (200) selon l'une quelconque des revendications précédentes, présentant en outre :
avant la demande (220) de la mesure d'une distance (D1, D2, D3) du point spatial (120a, b, c) respectif par rapport au capteur d'image 3D :
la vérification (210) si dans le champ de vision du capteur d'image 3D (101) un objet se trouve entre le capteur d'image 3D (101) et un nombre défini des points spatiaux (120a, b, c) prédéterminés ; et
si c'est le cas, la suspension de la demande de la mesure ; et
sinon la poursuite du procédé, y compris la demande de la mesure.

5. Procédé (200) selon l'une quelconque des revendications précédentes, présentant en outre :
la sélection (265, 270) des deux points parmi les points spatiaux dont les mesures de distance associées présentent selon un critère de confiance, qui est basé sur les écarts de distance (A1, ..., A3) établis pour les points spatiaux (120a, b, c), respectivement la plus haute confiance relativement parmi tous les points spatiaux (120a, b, c) ;
dans lequel la détermination de la valeur de correction de distance (Bj) est effectuée en fonction des écarts de distance (Ax, Ay) respectivement établis pour ces deux points spatiaux déterminés de telle sorte que la valeur de correction de distance (Bj) se trouve dans l'intervalle de distance formé par ces deux écarts de distance (Ax, Ay).

6. Procédé (200) selon la revendication 5, dans lequel la sélection (265, 270) des deux points spatiaux (120a, b, c) présente :
le calcul (265) de la différence (C12, C23, C31) respective des écarts de distance (A1, ..., A3) associés d'un premier et d'un deuxième des points spatiaux (120a, b, c) pour toutes les paires possibles de respectivement deux points différents des points spatiaux (120a, b, c) ; et
la détermination de la plus petite de ces différences, et fixer les deux points spatiaux correspondant à cette plus petite différence (C) comme points spatiaux sélectionnés.

7. Procédé (200) selon la revendication 5 ou 6, présentant en outre :
la vérification si la différence (C) des écarts de distance (Ax, Ay) respectifs des deux points spatiaux sélectionnés atteint ou dépasse un seuil de différence prédéterminé (Tc) ;
si c'est le cas, l'arrêt (260) du procédé (200), ou dans le cas d'un déroulement de procédé par plusieurs étapes, au moins l'arrêt du passage actuel (j) du procédé ; et sinon la poursuite du procédé (200) ou du passage actuel (j).

8. Procédé (200) selon l'une quelconque des revendications 5 à 7, dans lequel la valeur de correction de distance (Bj), dans la mesure où elle est déterminée, est établie à l'aide d'un calcul de moyenne (280) sur la base des écarts de distance (Ax, Ay) individuels établis pour les points spatiaux sélectionnés.

9. Procédé (200) selon l'une quelconque des revendications précédentes, dans lequel :
le procédé (200) est effectué de manière itérative et présente à cet effet au moins deux (M) passages dans lesquels respectivement selon l'une quelconque des revendications précédentes une valeur de correction de distance (Bj) respective est déterminée pour le passage (j) correspondant ; et
la prise en compte (305) des valeurs de correction de distance (Bj) déterminées respectivement lors des passages (j) est effectuée dans le cadre de la correction du résultat de mesure pour ladite au moins une distance mesurée au moyen du capteur d'image 3D (101) lors d'une autre mesure de distance suivante, à l'aide d'une valeur de correction de distance globale (B) qui est établie (295) en fonction des valeurs de correction de distance (Bj) déterminées au total dans les passages (j) individuels.

10. Procédé (200) selon la revendication 9, dans lequel la valeur de correction de distance (B) globale est établie à l'aide d'un calcul de moyenne (295) sur la base des valeurs de correction de distance (Bj) individuelles établies pour les différents passages (j).

11. Procédé (200) selon l'une quelconque des revendications précédentes, présentant en outre :
le stockage (300) au moins de la valeur de correction de distance (Bj) établie en dernier respectivement ou de la valeur de correction de distance (B) globale déterminée selon l'une quelconque des revendications 9 à 11 dans une mémoire non volatile (103b) ;
dans lequel pour corriger (305) le résultat de mesure, pour la distance mesurée au moyen du capteur d'image 3D (101) respectivement lors d'au moins une autre mesure de distance suivante, on utilise la valeur (B_{NVM}) stockée en dernier dans la mémoire pour la valeur de correction de distance (Bj) ou le cas échéant pour la valeur de correction de distance globale (B).

12. Procédé (200) selon l'une quelconque des revendications précédentes, dans lequel pour corriger (305) le résultat de mesure, pour la distance mesurée au moyen du capteur d'image 3D (101) respectivement lors d'au moins une autre mesure de distance suivante, on fait appel en plus à une valeur de base dépendant de la température (K_{T}(T)) associée au capteur d'image 3D.

13. Dispositif (102, 103) permettant d'étalonner un capteur d'image 3D (101), le dispositif étant conçu pour exécuter le procédé (200) selon l'une quelconque des revendications précédentes.

14. Dispositif (101, 102, 103) selon la revendication 13, présentant en outre le capteur d'image 3D (101) proprement dit, à étalonner selon le procédé.

15. Système (100) de reconnaissance de gestes, présentant un dispositif (101, 102, 103) selon la revendication 13 ou 14 qui est conçu pour exécuter le procédé (200) selon l'une quelconque des revendications 1 à 12 afin d'étalonner un capteur d'image 3D (101) prévu pour la reconnaissance de gestes du système (100) de reconnaissance de gestes.

16. Programme informatique comprenant des instructions qui font que le dispositif (101, 102, 103) selon la revendication 13 ou 14 exécute les étapes du procédé (200) selon l'une quelconque des revendications 1 à 12.
